# EUROPEAN PATENT SPECIFICATION

(11) **EP 3 590 101 B1**
(45) Date of publication and mention of the grant of the patent: **26.01.2022**
(21) Application number: 18710979.8
(22) Date of filing: 28.02.2018
(51) Int. Cl.: G07C 9/00, G06F 21/00, H04L 29/06, G06F 21/60, G07C 9/27

(54) **A FRAMEWORK FOR ACCESS PROVISIONING IN PHYSICAL ACCESS CONTROL SYSTEMS**
RAHMEN ZUR ZUGANGSBEREITSTELLUNG IN PHYSIKALISCHEN ZUGANGSKONTROLLSYSTEMEN
ARCHITECTURE DE FOURNITURE D'ACCÈS DANS DES SYSTÈMES DE CONTRÔLE D'ACCÈS PHYSIQUE

(30) Priority: 01.03.2017 US 201762465578 P
(43) Date of publication of application: 08.01.2020
(73) Proprietor: Carrier Corporation, Jupiter, FL 33458 (US)
(72) Inventor: TIWARI, Ankit, East Hartford, Connecticut 06108 (US); HADZIC, Tarik, Penrose Wharf Cork (IE); BOUBEKEUR, Menouer, Penrose Wharf Cork (IE); FLORENTINO, Blanca, Penrose Wharf Cork (IE); MARCHIOLI, John, Pittsford, New York 14534 (US); GAUTHIER, Ed, Pittsford, New York 14534 (US); NOVOZHENETS, Yuri, Pittsford, New York 14534 (US)
(74) Representative: Dehns
(86) International application number: PCT/US2018/020216
(87) International publication number: WO 2018/160687

(56) References cited:
- US-A1- 2008 209 506
- US-A1- 2013 091 539

## Description

### TECHNICAL FIELD

The subject matter disclosed herein relates generally to physical access control systems (PACS), and more particularly a framework for access provisioning in a PACS.

### BACKGROUND

Physical access control systems (PACS) prevent unauthorized individuals access to protected areas. Individuals who have a credential (e.g., card, badge, RFID card, FOB, or mobile device) present it at an access point (e.g., swipe a card at a reader) and the PACS makes an almost immediate decision whether to grant them access (e.g., unlock the door). The decision is usually computed at a controller by checking a permissions database to ascertain whether there is a static permission linked to requester's credential. If the permission(s) are correct, the PACS unlocks the door as requested providing the requestor access. Typically, with static permissions, such a request for access can be made at any given time of the day and access will be granted. In standard deployment of a PACS, a permission(s) database is maintained at a central server and relevant parts of the permissions database are downloaded to individual controllers that control the locks at the doors.

When a cardholder swipes a card at a reader, a new record is created in an access event record database, specifying the time of the day, the identity of the cardholder, the identifier of the reader and the response of the system that denies or grants access. In PACS systems static permissions include a combined reference to a physical location (a reader, a door) and time (a period of time during which the entry to a reader is permitted). Currently an administrator based on their know-how of the facility and organization access policy, decides the static permissions a cardholder should receive and then manually looks up the desired permissions in the system for assigning these to the user. However, this process is time consuming and error prone as there can be thousands of static permissions in the systems and 100s of thousands of cardholders. Moreover, in large organizations, a single administrator may not have all the required knowledge about the facility *&* local site policies to do so correctly. This can often lead to policy violations or cardholders waiting at the door as they do not have the permissions they should have had in the system.

Patent application publication US2013/091539 A1 discloses a system providing guidance to an administrator in revising access policies in response to a detected anomaly.

### BRIEF SUMMARY

The present invention is defined in the independent claim. Preferred embodiments are defined in the dependent claims.

According to an exemplary embodiment, described herein is a framework for access provisioning in a physical access control system (PACS). The framework includes a permissions request interface, the permissions request interface configured to allow a user or an administrator to request authorization to add/revoke access permission to a resource, a permissions recommendation module communicating with the permissions request interface to receive the request and recommend appropriate permissions to be assigned to, or removed from, the user. The framework also includes a permissions validation module operable to ensure that the permission to be assigned to or to be removed does not violate an existing access control policy, that the permissions to be assigned permits access to all permitted resources, or that the permission to be removed from the user denies access to all revoked resources only and not to the permitted resources, and an approval workflow identification module identifying an approval process, including documentation, required to assign or remove the permissions.

In addition to one or more of the features described above or below, or as an alternative, further embodiments could include that the permission is to be assigned to, or removed from, the user based on at least one of an attribute presented by the user, a static permission assigned to other users, and a used permission of other users.

In addition to one or more of the features described above or below, or as an alternative, further embodiments could include that the recommending a permission is based on existing access control policies for users with a selected attribute.

In addition to one or more of the features described above or below, or as an alternative, further embodiments could include that the recommending a permission is based on static permissions for users with a similar attribute.

In addition to one or more of the features described above or below, or as an alternative, further embodiments could include that the recommending a permission is based on a used permission for users with a similar attribute.

In addition to one or more of the features described above or below, or as an alternative, further embodiments could include that the attribute is specific to the user.

In addition to one or more of the features described above or below, or as an alternative, further embodiments could include that the attribute is generic to a group of users.

In addition to one or more of the features described above or below, or as an alternative, further embodiments could include that the attribute is at least one of a user's role, a user's department, a badge type, a badge/card ID.

In addition to one or more of the features described above or below, or as an alternative, further embodiments could include an administrator at least one of, reviewing, adding to, and removing from the recommended permission and presenting accepted recommended permissions to the permissions validation module.

In addition to one or more of the features described above or below, or as an alternative, further embodiments could include the permissions validation module ensuring that the permission to be assigned to the user is sufficient for reaching all permitted resources, or that the permission to be removed from the user denies access to all revoked resources.

In addition to one or more of the features described above or below, or as an alternative, further embodiments could include the permissions validation module generating a report identifying any violations of access to permitted resources based on the permission or any access to revoked resources based on revoked permissions.

In addition to one or more of the features described above or below, or as an alternative, further embodiments could include that not violating an existing access control policy, includes ensuring that users with a selected attribute do not have the permissions to access a selected resource with another selected attribute.

In addition to one or more of the features described above or below, or as an alternative, further embodiments could include the permissions validation module generating a report identifying any access control policy violations.

In addition to one or more of the features described above or below, or as an alternative, further embodiments could include that the permissions validation module is invoked by an administrator.

In addition to one or more of the features described above or below, or as an alternative, further embodiments could include that the approval workflow identification module identifies a manager of a resource to approve a recommended permission.

In addition to one or more of the features described above or below, or as an alternative, further embodiments could include that the approval workflow identification module identifies user information required to complete the approval.

In addition to one or more of the features described above or below, or as an alternative, further embodiments could include that the approval workflow identification module at least one of, identifies authorized approvers for verifying the identified user information and invokes an external workflow engine and configures it with the identified user information.

Also described herein in an embodiment is a physical access control system (PACS) with a framework for access provisioning. The physical access control system including a user, the user having a credential including user information stored thereon, the user presenting the credential to request access to a resource protected by a door, a reader in operative communication with the credential and configured to read user information from the credential, and a controller executing a set of access control permissions for permitting access of the user to the resource, the permissions generated with a framework for access provisioning. The framework includes a permissions request interface, the permissions request interface configured to permit a user or an administrator to provide a request for a permission to access/revoke access to a resource in the PACS, and a permissions recommendation module, the permissions recommendation module in operable communication with the permissions request interface to receive the request, the permissions recommendation module recommending a permission to be assigned to, or removed from, the user based on at least one of an attribute presented by the user, a static permission assigned to other users, and a used permission of other users. The frame work also includes a permissions validation module in operable communication with the permissions recommendation module, the permission validation module operable to ensure that at least one of the permission to be assigned to or to be removed from the user does not violate an existing access control policy, that the permission to be assigned to the user is sufficient for reaching all permitted resources, and that the permission to be removed from the user denies access to all revoked resources, and an approval workflow identification module operably connected to the permission validation module, the approval workflow identification module identifying an approval required to assign or remove the permission. The system also incudes that the controller is disposed at the door to permit access to the resource via the door.

Also described herein in an embodiment is a method of access provisioning in a physical access control system (PACS). The method includes receiving a request from at least one of a user and an administrator to provide a permission to access or revoke a permission access to a resource in the PACS, recommending a permission to be assigned to, or removed from, the user based on at least one of an attribute presented by the user, a static permission assigned to other users, and a used permission of other users, validating that at least one of, the permission to be assigned to or to be removed from the user does not violate an existing access control policy, that the permission to be assigned to the user is sufficient for reaching all permitted resources, and that the permission to be removed from the user denies access to all revoked resources, and identifying an approval required to assign or remove the permission.

Other aspects, features, and techniques of embodiments will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 depicts a standard deployment and operation of a conventional PACS;
FIG. 2 depicts an intelligent framework for access provisioning in a PACS in accordance with an embodiment; and
FIG. 3 is a flowchart depicting a methodology of access provisioning in a PACS in accordance with an embodiment.

### DETAILED DESCRIPTION

In general, embodiments herein relate to an intelligent framework for managing access permissions in PACSs. The framework learns from the information within the PACS software to simplify all aspects of assigning and revoking permissions to a single or a set of cardholders. The framework can be used for simplifying the process for assigning permissions with a new cardholder, adding new permissions or revoking permissions for an existing card holder.

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection".

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in Figure X may be labeled "Xa" and a similar feature in Figure Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

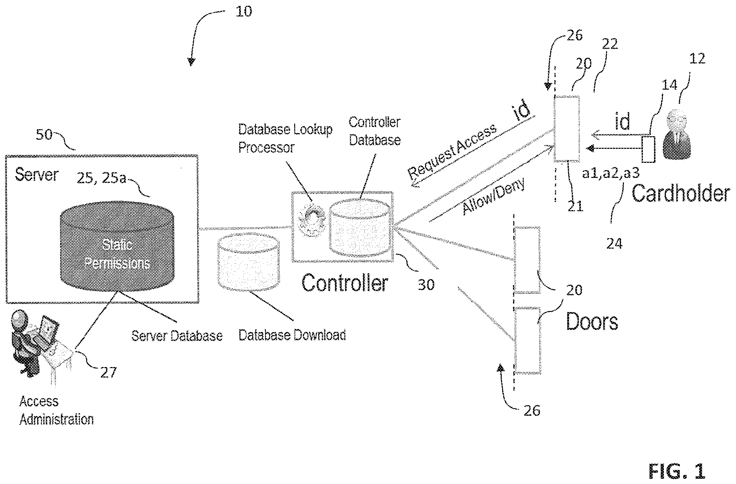

FIG 1 depicts a relatively standard deployment and operation of a conventional PACS 10. In the figure, a user 12 with a credential 14 e.g., cardholder arrives at a reader 22 at a given access point with a lock 21 e.g., locked door 20, gate etc. controlling access to a protected space also called a resource 26. The user 12 presents the credential 14 (e.g., smartcard, badge, FOB, or mobile device) which is read by the reader 22 and identification information stored on the credential 14 is accessed and transmitted to a local controller 30. The controller 30 compares the identification information from the credential 14 with a permissions database 25 on the controller 30 to ascertain whether there is a static permission 25a linked to user's credential 14. If the permission(s) 25 are correct, i.e., there is a match, and the particular credential 14 has authorization to access the protected space 26, the controller 30 then sends a command to the door controller or lock 21 to unlock the door 20 as requested providing the user or requestor 12 access. The controller 30 in this instance, makes an almost immediate decision whether to grant the access (e.g., unlock the door). Users 12 also expect a rapid response, waiting at the access point of access decisions would be very undesirable and wasteful. In a conventional deployment of a PACS 10, a set of static permission(s) 25a database is maintained at a central server 50. To ensure rapid response when queried, relevant parts of the permissions database are downloaded to individual controllers 30 that control the locks 21 at the doors 20.

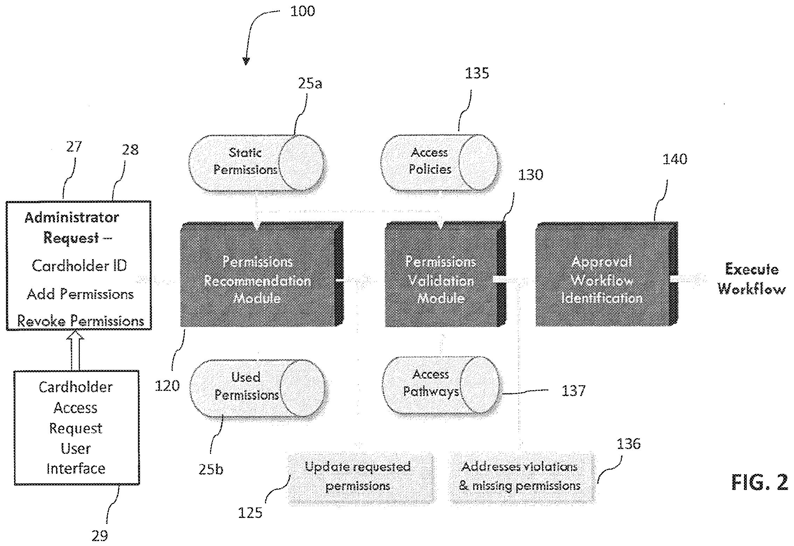

In many PACS, such as the access control system 10 shown in FIG. 1, neither the card readers 22 nor the credentials 14 (e.g., access cards) have any appreciable processing, power, or memory themselves. Hence, such card readers 22 and access cards are usually referred to as passive devices. By contrast, the centralized controller 30 and server 50 of the access control system 10 is usually a well-designed and sophisticated device with fail-operational capabilities and advanced hardware and algorithms to perform fast decision making. Moreover, the decision making process of the centralized controller 30 is fundamentally based on performing a lookup in of the static permissions 25. The static permissions 25 contains static policy based rules (e.g., one rule might provide that user 12 is not allowed entry into a given room), which change only when the policy 135 (FIG. 2) changes (e.g., the static permissions 25 might be changed to provide that user 12 can henceforth enjoy the privileges of a given room). Policies 135 are implemented in a set of rules that governs authorization. The policies 135 as mentioned above can be viewed as context-independent policies 135 and rules. In contrast, context-sensitive policies 135 will require a dynamic evaluation of different states of the PACS 10, building system parameters, other building systems, and external criteria, maybe even including the user's past history of activities. This evaluation is referred to as dynamic authorization.

With such an interconnect architecture of depicted in FIG. 1 and with a reasonable number of users 12 of a protected facility, the PACS 10 using static permissions 25 makes decisions quickly, is reliable, and is considered to be reasonably robust. However, as buildings expand and enterprises expand, the use of the static permissions 25a database on server 50 can grow and become unwieldy. Making it difficult to download to controller 30 or implement corrections. Furthermore, it is expected that buildings and facilities of the future will require increasingly more intelligent physical access control solutions. For example, access control solutions are being provided with the capability to detect such conditions as intrusion and fire. In general, this increased capability implies that such access control solutions should be provided with the ability to specify conditions that are dynamically evaluated, e.g., disable entry to a particular room in case of a break-in, and/or disable entry to a particular room if its occupancy reaches its capacity limit, and/or allow entry to a normal user only if a supervisor is already present inside the room, etc. This increased capability leads to a significant emphasis on the need for dynamic framework for assigning permissions for new users as well as adding new permissions or modifying permissions for existing users. Such dynamic framework can be centrally implemented with a framework and architecture that learns information within PACS 10 to facilitate or automate future tasks including modifications and reconfiguration of permissions and workflows.

Turning now to FIG. 2 as well, depicting an intelligent framework 100 for access provisioning in a PACS 10 in accordance with an embodiment. The framework 100 consists of the following distinct modules: Permissions Recommendation Module (PRM) 120 - When a new cardholder 12 is added to the system 10, the PRM 120 uses a variety of inputs in the PACS 10 to automatically recommend the access levels and permissions 25 that should be assigned to the new cardholder 12; Permissions Validation Module (PVM) 130 - The PVM 130 ensures that once the requested permissions 25 are added or revoked, the cardholder 12 will not violate any access policies 135 for the organization and/or be able to access all permitted resources 26 (rooms, areas, and the like); Approval Workflow Identification Module - (AWIM) 140 the AWIM 140 analyzes the permissions 25 being added to identify users 12 in the PACS 10 that can approve the proposed assignment of permissions 25. Such users 12 would be provided with such authority either because they are the designated resource/area 26 owners or have approved similar assignments of permissions 25 in the past. The AWIM 140 also identifies the cardholder information 14 (say a copy of passport, training certificate, etc.) that will be required by each of the approvers. The module 140 then invokes a workflow engine to generate and execute an identified workflow to complete the required approvals.

Continuing now with FIG. 2 for a detailed description regarding the PRM 120. In an embodiment, to formulate a recommendation of proposed permissions 25 when adding a new user 12 to the PACS 10, an administrator 27 inputs information into a permission request interface. 28 (also entitled Access Request Manager 28. The permissions request manager provides a user interface for adding users, adding and revoking permissions for existing users and the like. The PRM 120 uses existing access control policies 135 specifying the cardholders 12 with certain attributes 24 (FIG. 1) should have permissions 25 to resources/areas 26 with certain attributes 24 or permissions 25 to specific resources/areas 26. That is, a user 12 with certain attributes 24 may have the same permissions 25 as all other users 12 with that attribute 24. Attributes 24 can be general in nature such as a user's 12 as role, badge type etc., but can also include specifics such as badge ID or cardholder ID. The attributes 24 can be both user specific and generic in nature for an entire group of users 112. Attributes are a generic concept that should be applicable to resources as well, i.e. resources have attributes just as users. In access control, resource is often a protect area, office, conference room, etc. within a building. However, it could be anything that required controlled access for example a laptop, server, an equipment, etc. Any aspect of a resource (location, purpose, value, voltage, weight, reliability etc.) may be seen as an attribute. Attributes 24 can be both user specific and generic in nature for an entire group of users 12. Attributes 24 can also be "resource attributes", any attributes 24 specifically associated with a resource 26 and "user attributes," i.e., any attributes specifically associated with a user 12. Other attributes may include, but are not limited to cardholder's building, location, floor, department, functional role within organization, validity of training that must be taken (e.g. to operate complex machinery controlled by the access mechanism), other certifications, citizenship and export control status which determines access to material subject to international trade and compliance laws etc.

In another embodiment, to formulate a recommendation the PRM 120 may employ static permissions 25a for cardholders 12 with similar attributes 24. These are the permissions 25 assigned to existing cardholders 12 with attributes 24 similar to the new cardholder 12. In yet another embodiment the PRM 120 may employ the actual used permissions 25b for cardholders 12 with similar attributes 24. These are the permissions 25b that are historically actually been used by the existing cardholders 12 with similar attributes 24.

When new permissions 25 are added for an existing cardholder 12, in addition to using the above listed information, the PRM 120 also analyzes the static permissions 25a for other cardholders 12 that already have the requested permissions 25 to recommend additional permissions 25 that the requesting cardholder 12 might need. For example, a request for a permission 25 that may require access to an intervening door 20, would result in a suggestion of granting permission 25 for that door 20 as well. Furthermore, when revoking a given permission for an existing cardholder 12, the PRM 120 also identifies and recommends other permissions 25 that should be removed by analyzing other cardholders12 with these permissions 25, and attributes 24 of the resources or areas 26 for which permissions 25 are being revoked.

Continuing with FIG. 2, when the PRM 120 generates the recommendations for permissions 25, it also indicates the rationale for recommending the permission, for example, by displaying the percentage of similar cardholders 12 with recommended permissions 25, percentage of cardholders 12 using the recommended permissions 25, etc. This allows an administrator 27 (FIG. 1) to make an informed decision when accepting or rejecting the recommendations. Once an administrator 27 has accepted or rejected the permissions 25 and added any new permissions 25, the permissions are updated and saved as shown at 125 and the permissions validation module (PVM) 130 is invoked.

Note that the recommendations generated by the PRM 120 can be used to populate different user interfaces used for different entities involved in the overall permissions management workflow. For example, in one instance, a cardholder 12 can self-request permissions 25 to certain resources 26 using a permissions request interface. In particular, in one embodiment the cardholder 12 may employ a Cardholder Access Request user interface 29. In such a case, a subset of the permission 25 recommendations generated by the PRM 120 for an administrator 27 can be displayed to the cardholder 12 in order to assist them in requesting the correct permissions 25. In another example, when a manager of an area or resource 26 receives an access request for approval, the subset of permission 25 recommendations that fall within the resource 26 may be identified and displayed to the manager so that they can proactively approve or add permissions 25 that may be needed by the requesting user 12.

Continuing with FIG. 2 for a detailed description regarding the Permissions Validation Module (PVM) 130. In an embodiment, the PVM 130 ensures that once the requested permissions 25 are added or revoked, the cardholder 12 will a) not violate any access policies for the organization, and b) be able to access all permitted resources/areas 26. In an embodiment, in order to accomplish the validation, the PVM 130 uses access policies 135 specifying that the cardholders 12 with certain attributes 24 should not have permissions 25 to access resources/areas 26 with certain attributes 24 or permissions 25 to specific resources/areas 26. In other words, the PVM 130 ensures that based on a select set of attributes 24, cardholder 12 does not have access to certain resources 26 they should not, given those attributes 24. In another embodiment, either alone or in combination with the validation above, the PVM 130 also employs Access Pathways 137 specifying areas/resources 26 that need to be accessed before reaching each of the permitted areas/resources 26 for the cardholders 12. In other words, if there is an intervening door for which permissions 25 are required the PVM 130 ensures that permissions 25 for the intervening door have also been granted based on the expected pathways 137 the user 12 would need to travel to get from one resource 26 to the next.

Using the above information, the PVM 130 may generate a report 136 indicating any violations of a policy 135, i.e., permissions that are not allowed according to the access policy 135, any missing permissions 25, i.e., permissions 25 without which cardholder 12 may not able to access one the existing resources 26 based on the assigned permissions 25, or any anomalous permissions 25, i.e., permissions that are typically not assigned to cardholders 12 with given profile, attributes 24 and the like. For example, in an enterprise, access to "All Perimeter Doors" is provided to cardholders 12 with attribute 24 "Department" = "Security" only. So any attempt to assign "All Perimeter Doors" to a cardholder 12 with "Department" = "Engineering" would be flagged as an anomalous permission assignment. Such a report is derived by identifying statistically anomalous permissions 25.

To facilitate with the validation, in an embodiment an administrator 27 may then use the interactive report provided by the PVM 130 to either investigate and fix violations identified by removing the offending permissions 25, or make an judgement to declare the violations as exceptions and keep the offending permissions 25 as exceptions. Similarly, where needed, the administrator 27 can either add a missing permission 25 or elect to leave out the missing permissions 25 and declare the missing permissions 25 as exceptions, indicating that an escort will enable the access to the resource 26 for which a permission 25 was not granted.

Advantageously, the results from analysis of the PVM 130 can also be used at different stages within the overall workflow. For example when a cardholder 12 uses the abovementioned Cardholder Access Request user interface 29 to request a particular access permission 25, they can be immediately validated in the PVM 130 and output from the PVM 130 can be used to automatically reject certain permissions 25 requests if they are not compliant with given policies 135 and there no established exceptions identified by an administrator 27 to that policy 135. Similarly, contemporaneous feedback can be provided to the cardholder 12 to indicate that the access to a particular resource 26 that they are requesting is typically not held by people with their profile. Alternatively, the PVM 130 can be automatically invoked by the Access Permission Request Interface or manager 28 when an administrator 27 or an owner/manager of a resource 26 is reviewing the access requests from cardholders 12. The Access Permission Request Interface 28 will assist an Administrator 27 in making the various decisions for approving/denying the request. In addition it could permit an administrator 27 to readily cite the reason for granting/denying permissions easily.

Finally, once the administrator 27 has addressed any identified the policy 135 violations and missing permissions 25, the Approval Workflow Identification Module 140 is invoked to establish any required workflow for authorizing and approving of permissions 25 requests and/or exceptions.

Continuing now with FIG. 2 for a detailed description regarding the Approval Workflow Identification Module (AWIM) 140. The workflow here refers to the sequence of review and approvals required for granting or revoking the permissions in an enterprise. Each enterprise would define their own set of user attributes, admissible proof of those attributes, decision makers for reviewing the attributes and approving the permission assignments. In an embodiment, the AWIM 140 analyzes the permissions 25 being added to identify users 12 in the PACS 10 that can approve the assignment of permissions 25 either because they are the designated resource 26 owners or have approved similar permissions 25 in the past. The AWIM 140 also identifies the cardholder 12 information (say a copy of passport, training certificate, etc.) that will be required by each of the approvers. The AWIM 140 then invokes a workflow engine, which manages the execution of defined workflow by assigning tasks in defined sequence to different reviewers / approvers, requestors, tracking the progress of workflow, and communicating data between the participants. It could be a third party software like YAWL (Yet Another Workflow Language), for executing the identified workflow. For example, if an enterprise has a policy of giving "All Common Areas" access to Cardiopulmonary resuscitation (CPR) trained employees, the AWIM 140 would use the workflow engine to send an email to the training department for verifying (emailing or uploading) the CPR training, email the identified Security Manager about the pending verification. Once the training department has verified the certification, workflow engine will notify the security manager to review and process the permissions request.

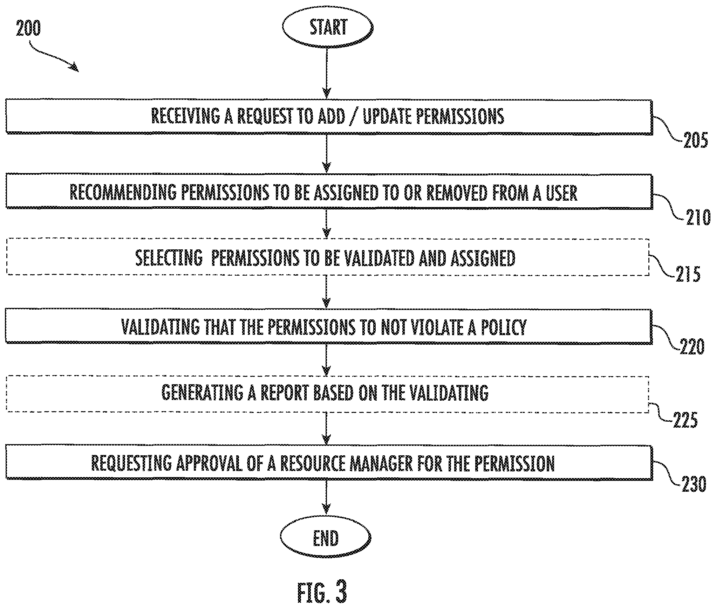

Turning now to FIG. 3 depicting a flow chart illustrating the method 200 of access provisioning in a PACS 100. In an embodiment, the methodology 200 is initiated at process step 205 with a user 12 or administrator 27 request for a permission 25 to access a given resource 26. As described above, the PRM 120 provides a recommendation of permissions 25 for the user 12 based on the user's attributes 24, similar users, and the like as depicted at process step 210. Optionally, the administrator 27 may accept or reject selected recommended permissions 25 as depicted at process stem 215 and as described previously herein. The methodology 200 continues at process step 220 with the PVM 130 validating that the recommended permissions 25 and any selected or added by the administrator 27 do not violate any access control policies 135 in the PACS 10 . Optionally the PVM 130 may also generate a report 136 based on the validating as depicted at process step 225. Finally, at process step 230 the OVIM establishes workflows to obtain the necessary approvals of managers of resources 26 as needed for the permissions 25 to be granted to the user 12 as described herein.

Advantageously, the access management framework 100 described herein exhibits numerous benefits over conventional PACS. The framework 100 significantly reduces the time required for executing some of the most common tasks associated with administration of a PACS 10 For example, adding new cardholders 12, adding permissions 25 to existing cardholders 12, removing permissions 25 for existing cardholders 12 while preventing violations of organizational/regulatory access policies 135. Moreover, the framework 100 significantly reduces the facilities and organizational know-how required of administrators 27 for managing accessing permissions 25. This is a significant benefit for managed access control providers who may not be familiar with the organization. The framework 100 also automates part of the administrative processes and reduces callbacks or service requests related to missing permissions 25 within an organization.

Moreover, as discussed above, framework 100 and system 10 may include the administrator 27. The system administrator 27 may be used to supply special system contexts or permissions 25 that are in addition to any system contexts. Such special system contexts, for example, may be used to take care of difficult situations including but not limited to revoking the access rights of a rogue user 12. Also, the system administrator 27 may be arranged to formally specify policy roles as the policies 135 relate to each user 12 and to assign the users 12 to appropriate ones of these roles.

Usually the policies 135 will not differ across every individual 12, but are likely to be different across groups of individuals 12. In this sense, a role refers to a certain policy 135 or groups of policies 135 that is applicable to a certain class of user 12. For example, a "supervisor" is a role that can include the policy 135 of free access to all rooms/resources 26, whereas a "regular employee" can be a role that includes policies 135 which allow an entry to certain protected rooms/resources 26 only if a "supervisor" is present. For example, the access control system 10 may also include user-specific authorization policies 135. An example of this can be a special user 12 who is not a regular employee at a site but needs better structured access control policies 135 as compared to a user 12 that is identified as a visitor.

The terminology used herein is for the purpose of describing particular embodiments only and is not intended to be limiting. While the description has been presented for purposes of illustration and description, it is not intended to be exhaustive or limited to the form disclosed. Many modifications, variations, alterations, substitutions, or equivalent arrangement not hereto described will be apparent to those of ordinary skill in the art without departing from the scope of the disclosure. Additionally, while the various embodiments have been described, it is to be understood that aspects may include only some of the described embodiments. Accordingly, embodiments are not to be seen as being limited by the foregoing description, but is only limited by the scope of the appended claims.

## Claims

1. A framework (100) for access provisioning in a physical access control system (PACS) (10), the framework comprising:
a permissions request interface (28), the permissions request interface configured to permit a user or an administrator to provide a request for a permission to access/revoke access to a resource (26) in the PACS;
a permissions recommendation module (120), the permissions recommendation module in operable communication with the permissions request interface to receive the request, the permissions recommendation module configured to automatically recommend a permission to be assigned to, or removed from, the user based on at least one of an attribute (24) presented by the user, a static permission (25a) assigned to other users, and a used permission (25b) of other users in response to receiving the request;
a permissions validation module (130) in operable communication with the permissions recommendation module, the permission validation module operable to ensure that at least one of the permission to be assigned to or to be removed from the user does not violate an existing access control policy, that the permission to be assigned to the user is sufficient for reaching all permitted resources, and that the permission to be removed from the user denies access to all revoked resources; and
an approval workflow identification module (140) operably connected to the permission validation module, the approval workflow identification module configured to identify an approval process required to assign or remove the permission.

2. The framework (100) for access provisioning in a PACS (10) of claim 1 wherein the permission is to be assigned to, or removed from, the user based on at least one of an attribute (24) presented by the user, a static permission (25a) assigned to other users, and a used permission (25b) of other users.

3. The framework (100) for access provisioning in a PACS (10) of claim 2 wherein the recommending a permission is based on existing access control policies for users with a selected attribute (24).

4. The framework (100) for access provisioning in a PACS (10) of claim 2 wherein the recommending a permission is based on static permissions for users with a similar attribute (24).

5. The framework (100) for access provisioning in a PACS (10) of claim 2 wherein the recommending a permission is based on a used permission (25b) for users with a similar attribute (24).

6. The framework (100) for access provisioning in a PACS (10) of claim 2, wherein the attribute (24) is specific to the user.

7. The framework (100) for access provisioning in a PACS (10) of claim 2, wherein the attribute (24) is generic to a group of users.

8. The framework (100) for access provisioning in a PACS (10) of claim 1, wherein the attribute is at least one of a user' s role, a user's department, a badge type, a badge/card ID.

9. The framework (100) for access provisioning in a PACS (10) of claim 1, further including an administrator (27) at least one of, reviewing, adding to, and removing from the recommended permission and presenting accepted recommended permissions to the permissions validation module (130).

10. The framework (100) for access provisioning in a PACS (10) of claim 1, further including the permissions validation module (130) ensuring that the permission to be assigned to the user is sufficient for reaching all permitted resources (26), or that the permission to be removed from the user denies access to all revoked resources.

11. The framework (100) for access provisioning in a PACS (10) of claim 10, further including the permissions validation module (130) generating a report (136) identifying any violations of access to permitted resources (26) based on the permission or any access to revoked resources based on revoked permissions.

12. The framework (100) for access provisioning in a PACS (10) of claim 1, wherein not violating an existing access control policy includes ensuring that users with a selected attribute (24) do not have the permissions to access a selected resource (26) with another selected attribute.

13. The framework (100) for access provisioning in a PACS (10) of claim 11, further including the permissions validation module (130) generating a report (136) identifying any access control policy violations.

14. The framework (100) for access provisioning in a PACS (10) of claim 11, wherein the permissions validation module (130) is invoked by an administrator (27).

15. The framework (100) for access provisioning in a PACS (10) of claim 1 wherein the approval workflow identification module (140) identifies a manager (28) of a resource (26) to approve a recommended permission.

## Patentansprüche

1. Rahmen (100) zur Zugriffsbereitstellung in einem physischen Zugangskontrollsystem (PACS) (10), wobei der Rahmen umfasst:
eine Berechtigungsanforderungsschnittstelle (28), wobei die Berechtigungsanforderungsschnittstelle konfiguriert ist, um einem Benutzer oder einem Administrator zu erlauben, eine Anforderung für eine Berechtigung für oder gegen den Zugriff auf eine Ressource (26) in dem PACS bereitzustellen;
ein Berechtigungsempfehlungsmodul (120), wobei das Berechtigungsempfehlungsmodul in betriebsfähiger Kommunikation mit der Berechtigungsanforderungsschnittstelle ist, um die Anforderung zu empfangen, wobei das Berechtigungsempfehlungsmodul konfiguriert ist, um automatisch eine Berechtigung zu empfehlen, die dem Benutzer zugewiesen oder entzogen wird, basierend auf mindestens einem von einem Attribut (24), das von dem Benutzer vorgelegt wird, einer zugewiesenen statischen Berechtigung (25a), die anderen Benutzern zugewiesen ist, und einer von anderen Benutzern verwendeten Berechtigung (25b) als Reaktion auf das Empfangen der Anforderung;
ein Berechtigungsvalidierungsmodul (130) in betriebsfähiger Kommunikation mit dem Berechtigungsempfehlungsmodul, wobei das Berechtigungsvalidierungsmodul betreibbar ist, um sicherzustellen, dass mindestens eine der Berechtigungen, die dem Benutzer zuzuweisen oder entzogen werden sollen, nicht gegen eine bestehende Zugangskontrollrichtlinie verstößt, dass die dem Benutzer zuzuweisende Berechtigung ausreichend ist, um alle zulässigen Ressourcen zu erreichen, und dass die dem Benutzer zu entziehende Berechtigung den Zugriff auf alle entzogenen Ressourcen verweigert; und
ein Genehmigungsworkflow-Identifizierungsmodul (140), das betriebsfähig mit dem Berechtigungsvalidierungsmodul verbunden ist, wobei das Genehmigungsworkflow-Identifizierungsmodul konfiguriert ist, um einen Genehmigungsprozess zu identifizieren, der erforderlich ist, um die Berechtigung zuzuweisen oder zu entziehen.

2. Rahmen (100) zur Zugriffsbereitstellung in einem PACS (10) nach Anspruch 1, wobei die Berechtigung dem Benutzer basierend auf mindestens einem von einem vom Benutzer vorgelegten Attribut (24), einer anderen Benutzern zugewiesenen statischen Berechtigung (25a) und einer von anderen Benutzern verwendeten Berechtigung (25b) zugewiesen oder entzogen wird.

3. Rahmen (100) zur Zugriffsbereitstellung in einem PACS (10) nach Anspruch 2, wobei das Empfehlen einer Berechtigung auf bestehenden Zugriffskontrollrichtlinien für Benutzer mit einem ausgewählten Attribut (24) basiert.

4. Rahmen (100) zur Zugriffsbereitstellung in einem PACS (10) nach Anspruch 2, wobei das Empfehlen einer Berechtigung auf statischen Berechtigungen für Benutzer mit einem ähnlichen Attribut (24) basiert.

5. Rahmen (100) zur Zugriffsbereitstellung in einem PACS (10) nach Anspruch 2, wobei das Empfehlen einer Berechtigung auf einer verwendeten Berechtigung (25b) für Benutzer mit einem ähnlichen Attribut (24) basiert.

6. Rahmen (100) für die Zugriffsbereitstellung in einem PACS (10) nach Anspruch 2, wobei das Attribut (24) für den Benutzer spezifisch ist.

7. Rahmen (100) für die Zugriffsbereitstellung in einem PACS (10) nach Anspruch 2, wobei das Attribut (24) für eine Gruppe von Benutzern generisch ist.

8. Rahmen (100) zur Zugriffsbereitstellung in einem PACS (10) nach Anspruch 1, wobei das Attribut mindestens eines von einer Benutzerrolle, einer Benutzerabteilung, einem Ausweistyp, einer Ausweis-/Karten-ID ist.

9. Rahmen (100) für die Zugriffsbereitstellung in einem PACS (10) nach Anspruch 1, weiter einschließend einen Administrator (27) mindestens eines von Überprüfen, Hinzufügen und Entziehen der empfohlenen Berechtigung und Vorlegen akzeptierter empfohlener Berechtigungen dem Berechtigungsvalidierungsmodul (130).

10. Rahmen (100) für die Zugriffsbereitstellung in einem PACS (10) nach Anspruch 1, weiter einschließend das Berechtigungsvalidierungsmodul (130), das sicherstellt, dass die dem Benutzer zuzuweisende Berechtigung ausreicht, um alle zulässigen Ressourcen (26) zu erreichen, oder dass die dem Benutzer zu entziehende Berechtigung den Zugriff auf alle entzogenen Ressourcen verweigert.

11. Rahmen (100) zur Zugriffsbereitstellung in einem PACS (10) nach Anspruch 10, weiter einschließend das Berechtigungsvalidierungsmodul (130), das einen Bericht (136) erzeugt, der jegliche Verstöße gegen den Zugriff auf zulässige Ressourcen (26) basierend auf der Berechtigung oder jedweden Zugriff auf entzogene Ressourcen basierend auf entzogenen Berechtigungen identifiziert.

12. Rahmen (100) zur Zugriffsbereitstellung in einem PACS (10) nach Anspruch 1, wobei das Nichtverletzen einer bestehenden Zugriffskontrollrichtlinie das Sicherstellen einschließt, dass Benutzer mit einem ausgewählten Attribut (24) keine Berechtigungen für den Zugriff auf eine ausgewählte Ressource (26) mit einem anderen ausgewählten Attribut haben.

13. Rahmen (100) zur Zugriffsbereitstellung in einem PACS (10) nach Anspruch 11, weiter einschließend das Berechtigungsvalidierungsmodul (130), das einen Bericht (136) erzeugt, der alle Verstöße gegen die Zugriffssteuerungsrichtlinie identifiziert.

14. Rahmen (100) zur Zugriffsbereitstellung in einem PACS (10) nach Anspruch 11, wobei das Berechtigungsvalidierungsmodul (130) von einem Administrator (27) abgerufen wird.

15. Rahmen (100) zur Zugriffsbereitstellung in einem PACS (10) nach Anspruch 1, wobei das Genehmigungsworkflow-Identifizierungsmodul (140) einen Verwalter (28) einer Ressource (26) identifiziert, um eine empfohlene Berechtigung zu genehmigen.

## Revendications

1. Structure (100) de fourniture d'accès dans un système de contrôle d'accès physique (PACS) (10), la structure comprenant :
une interface de demande de permission (28), l'interface de demande de permission étant configurée pour permettre à un utilisateur ou un administrateur de fournir une demande d'une permission d'accès/révoquer un accès à une ressource (26) dans le PACS ;
un module de recommandation de permission (120), le module de recommandation de permission étant en communication fonctionnelle avec l'interface de demande de permission pour recevoir la demande, le module de recommandation de permission étant configuré pour recommander automatiquement une permission à accorder à ou à retirer de l'utilisateur sur la base d'au moins l'un parmi un attribut (24) présenté par l'utilisateur, une permission statique (25a) accordée à d'autres utilisateurs, et une permission utilisée (25b) d'autres utilisateurs en réponse à la réception de la demande ;
un module de validation de permission (130) en communication fonctionnelle avec le module de recommandation de permission, le module de validation de permission étant fonctionnel pour s'assurer d'au moins l'un de ce qui suit : la permissions à accorder à ou à retirer de l'utilisateur n'enfreint pas une politique de contrôle d'accès existante, la permission à accorder à l'utilisateur est suffisante pour atteindre toutes les ressources permises, et la permission à retirer à l'utilisateur interdit l'accès à toutes les ressources révoquées ; et
un module d'identification de flux de travail d'approbation (140) relié fonctionnellement au module de validation de permission, le module d'identification de flux de travail d'approbation étant configuré pour identifier un processus d'approbation requis pour accorder ou retirer la permission.

2. Structure (100) de fourniture d'accès dans un PACS (10) selon la revendication 1, dans laquelle la permission est à accorder à ou à retirer de l'utilisateur sur la base d'au moins l'un parmi un attribut (24) présenté par l'utilisateur, une permission statique (25a) accordée à d'autres utilisateurs, et une permission utilisée (25b) d'autres utilisateurs.

3. Structure (100) de fourniture d'accès dans un PACS (10) selon la revendication 2, dans laquelle la recommandation d'une permission est basée sur des politiques de contrôle d'accès existantes pour des utilisateurs avec un attribut (24) sélectionné.

4. Structure (100) de fourniture d'accès dans un PACS (10) selon la revendication 2, dans laquelle la recommandation d'une permission est basée sur des permissions statiques pour des utilisateurs avec un attribut (24) similaire.

5. Structure (100) de fourniture d'accès dans un PACS (10) selon la revendication 2, dans laquelle la recommandation d'une permission est basée sur une permission utilisée (25b) pour des utilisateurs avec un attribut (24) similaire.

6. Structure (100) de fourniture d'accès dans un PACS (10) selon la revendication 2, dans laquelle l'attribut (24) est spécifique à l'utilisateur.

7. Structure (100) de fourniture d'accès dans un PACS (10) selon la revendication 2, dans laquelle l'attribut (24) est générique pour un groupe d'utilisateurs.

8. Structure (100) de fourniture d'accès dans un PACS (10) selon la revendication 1, dans laquelle l'attribut est au moins l'un parmi un rôle d'un utilisateur, un service d'un utilisateur, un type de badge, un identifiant de badge/carte.

9. Structure (100) de fourniture d'accès dans un PACS (10) selon la revendication 1, incluant en outre un administrateur (27) pour au moins l'un parmi l'examen de, l'ajout à et le retrait à la permission recommandée et la présentation de permissions recommandées acceptées au module de validation de permissions (130).

10. Structure (100) de fourniture d'accès dans un PACS (10) selon la revendication 1, incluant en outre que le module de validation de permission (130) s'assure que la permission à accorder à l'utilisateur est suffisante pour atteindre toutes les ressources permises (26) ou que la permission à retirer à l'utilisateur interdit l'accès à toutes les ressources révoquées.

11. Structure (100) de fourniture d'accès dans un PACS (10) selon la revendication 10, incluant en outre que le module de validation de permission (130) génère un rapport (136) identifiant toute infraction d'accès à des ressources permises (26) sur la base de la permission ou tout accès à des ressources révoquées sur la base de permissions révoquées.

12. Structure (100) de fourniture d'accès dans un PACS (10) selon la revendication 1, dans laquelle le fait de ne pas enfreindre une politique de contrôle d'accès existante inclut de s'assurer que des utilisateurs avec un attribut (24) sélectionné n'ont pas la permission d'accéder à une ressource sélectionnée (26) avec un autre attribut sélectionné.

13. Structure (100) de fourniture d'accès dans un PACS (10) selon la revendication 11, incluant en outre que le module de validation de permission (130) génère un rapport (136) identifiant toute infraction à la politique de contrôle d'accès.

14. Structure (100) de fourniture d'accès dans un PACS (10) selon la revendication 11, dans laquelle le module de validation de permission (130) est invoqué par un administrateur (27).

15. Structure (100) de fourniture d'accès dans un PACS (10) selon la revendication 1, dans laquelle le module d'identification de flux de travail d'approbation (140) identifie un gestionnaire (28) d'une ressource (26) pour approuver une permission recommandée.
